(19) Europäisches Patentamt
European Patent Office
Office européen des brevets

(11) EP 4 421 211 A1

(12) **EUROPEAN PATENT APPLICATION**
published in accordance with Art. 153(4) EPC

(43) Date of publication:
**28.08.2024 Bulletin 2024/35**

(21) Application number: **22883549.2**

(22) Date of filing: **18.10.2022**

(51) International Patent Classification (IPC):
***C25B 9/23*** (2021.01) ***C02F 1/461*** (2023.01)
***C25B 1/04*** (2021.01) ***C25B 9/00*** (2021.01)
***C25B 11/032*** (2021.01) ***C25B 11/043*** (2021.01)
***C25B 11/046*** (2021.01) ***C25B 11/052*** (2021.01)
***C25B 11/061*** (2021.01) ***C25B 11/063*** (2021.01)
***C25B 11/081*** (2021.01) ***C25B 13/02*** (2006.01)
***C25B 13/08*** (2006.01) ***H01M 4/86*** (2006.01)
***H01M 4/96*** (2006.01) ***H01M 8/0656*** (2016.01)
***H01M 8/10*** (2016.01) ***H01M 8/1004*** (2016.01)
***H01M 8/1058*** (2016.01)

(52) Cooperative Patent Classification (CPC):
**C02F 1/461; C25B 1/04; C25B 9/00; C25B 9/23; C25B 11/032; C25B 11/043; C25B 11/046; C25B 11/052; C25B 11/061; C25B 11/063; C25B 11/081; C25B 13/02; C25B 13/08; H01M 4/86; H01M 4/96;** (Cont.)

(86) International application number:
**PCT/JP2022/038689**

(87) International publication number:
**WO 2023/068245 (27.04.2023 Gazette 2023/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.10.2021 JP 2021171480**
**20.10.2021 JP 2021171481**

(71) Applicant: **Toray Industries, Inc.**
**Tokyo 103-8666 (JP)**

(72) Inventors:
- **MINAMIBAYASHI, Kenta**
  **Otsu-shi, Shiga 520-8558 (JP)**
- **IZUHARA, Daisuke**
  **Otsu-shi, Shiga 520-8558 (JP)**
- **KONISHI, Takashi**
  **Otsu-shi, Shiga 520-8558 (JP)**
- **SHIRAI, Shusuke**
  **Otsu-shi, Shiga 520-8558 (JP)**

(74) Representative: **Hoefer & Partner Patentanwälte mbB**
**Pilgersheimer Straße 20**
**81543 München (DE)**

(54) **WATER ELECTROLYSIS ELECTRODE STRUCTURE, WATER ELECTROLYSIS MEMBRANE ELECTRODE ASSEMBLY, AND WATER ELECTROLYSIS DEVICE**

(57) An object of the present invention is to provide an electrode assembly for water electrolysis, in which an electrolyte membrane is kept from being deteriorated. The present invention provides an electrode structure for water electrolysis, including an anode electrode and a cathode electrode disposed to face each other, characterized in that at least one of the anode electrode and the cathode electrode includes a porous component and a reticular component in order from the facing surface side, and the standard deviation of a pressure distribution at the surface of contact between the anode electrode and the cathode electrode, determined by the following measurement method, is 2.7 MPa or less.

<Measurement Method>

After a test piece that has a pressure measurement film sandwiched between the anode electrode and the cathode electrode is pressurized at 4 MPa for 2 minutes, the pressure distribution obtained by a pressure analysis from a color image of the pressure measurement film, obtained from a pressure image analysis system, is de-



Processed by Luminess, 75001 PARIS (FR)

(Cont. next page)

fined as a pressure distribution at the surface of contact between the anode electrode and the cathode electrode, and the standard deviation of the pressure distribution is determined.

FIG. 1

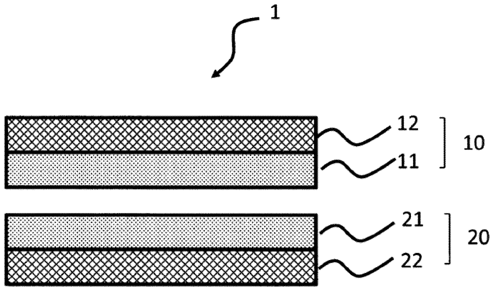


(52) Cooperative Patent Classification (CPC): (Cont.)
**H01M 8/0656; H01M 8/10; H01M 8/1004; H01M 8/1058;** Y02E 60/36; Y02E 60/50

## Description

### TECHNICAL FIELD

The present invention relates to an electrode structure for water electrolysis, a membrane electrode assembly for water electrolysis, and a water electrolyzer.

### BACKGROUND ART

In recent years, hydrogen energy has attracted attention as a means for storing and transporting energy in the next generation. Hydrogen, when used as a fuel for fuel cells, can be converted into electric power with theoretically higher energy efficiency than in power generation using a heat engine, and is free from harmful emissions, and thus, can serve as a highly efficient clean energy source.

One of hydrogen production schemes is electrolysis of water. Electrolysis of water with the use of surplus electric power from renewable energy can convert electric power into hydrogen energy without emission of carbon dioxide. Furthermore, depending on storage systems, hydrogen can be transported by tank truck or tanker, and can be supplied to necessary places when necessary, and thus, electrolysis of water has a high potential as a tool for power storage.

Hydrogen production schemes by electrolysis of water include alkaline water electrolysis and solid polymer electrolyte membrane (PEM) water electrolysis. The PEM water electrolysis has an advantage of being capable of operation at high current density and capable of flexibly responding to power fluctuations of renewable energy.

For an electrode structure for use in the PEM water electrolysis, typically, an anode electrode and a cathode electrode are disposed to face each other in a manner that sandwiches an electrolyte membrane. It is known that flow paths for circulating water as a raw material, and oxygen gas and hydrogen gas generated by electrolysis are provided in these electrodes. As suitable flow path forming components, reticular metal components such as a metal mesh or an expanded metal are known (see, for example, Patent Documents 1 to 2).

### PRIOR ART DOCUMENT

### PATENT DOCUMENTS

Patent Document 1: Japanese Patent Laid-open Publication No. 11-256380
Patent Document 2: Japanese Patent Laid-open Publication No. 2001-279479

### SUMMARY OF THE INVENTION

### PROBLEMS TO BE SOLVED BY THE INVENTION

It has been found, however, that the electrolyte membrane is prone to be deteriorated in such an electrode structure for water electrolysis as mentioned above, that is, the electrode structure including the reticular component.

Thus, an object of the present invention is to provide an electrode structure for water electrolysis, in which an electrolyte membrane is kept from being deteriorated. Another object of the present invention is to provide a membrane electrode assembly for water electrolysis and a water electrolyzer, in which an electrolyte membrane is kept from being deteriorated.

### SOLUTIONS TO THE PROBLEMS

The present inventors have found that the above-mentioned problem in the prior art is caused by the fact that a relatively high pressure is locally applied to the electrolyte membrane due to the surface uneven shape of the reticular component constituting the electrode, thereby making the present invention.

More specifically, the present invention provides an electrode structure for water electrolysis, including an anode electrode and a cathode electrode disposed to face each other, characterized in that at least one of the anode electrode and the cathode electrode includes a porous component and a reticular component in order from the facing surface side, and the standard deviation of a pressure distribution at the surface of contact between the anode electrode and the cathode electrode, determined by the following measurement method, is 2.7 MPa or less.

<Measurement Method>

After a test piece that has a pressure measurement film sandwiched between the anode electrode and the cathode electrode is pressurized at 4 MPa for 2 minutes, the pressure distribution obtained by a pressure analysis from a color image of the pressure measurement film, obtained from a pressure image analysis system, is defined as the pressure distribution at the surface of contact between the anode electrode and the cathode electrode, and the standard deviation of the pressure distribution is determined.

In addition, the present invention provides a membrane electrode assembly for water electrolysis, including an electrolyte membrane between the anode electrode and the cathode electrode of the electrode structure for water electrolysis according to the present invention.

In addition, the present invention provides a water electrolyzer including the electrode structure for water electrolysis according to the present invention.

EFFECTS OF THE INVENTION

According to the present invention, an electrode structure for water electrolysis can be provided, in which an electrolyte membrane is kept from being deteriorated, because no high pressure is locally applied to the electrolyte membrane.

BRIEF DESCRIPTION OF THE DRAWINGS

Fig. 1 is a schematic cross-sectional view in one form of an electrode structure according to the present invention.
Fig. 2 is a schematic cross-sectional view in one form of an electrode structure according to the present invention.
Fig. 3 is a schematic cross-sectional view in one form of an electrode structure according to the present invention.
Fig. 4 is a schematic plan view for explaining the mesh count of expanded metal.

EMBODIMENTS OF THE INVENTION

Hereinafter, embodiments of the present invention will be described in detail. However, the present invention is not limited to only the following embodiments, and various modifications can be made depending on purposes and applications.

Although details will be described later, an electrode structure according to the present invention is incorporated as a so-called membrane electrode assembly (MEA) that has an electrolyte membrane disposed between an anode electrode and a cathode electrode of the electrode structure, when the electrode structure is incorporated into an electrolysis cell of a water electrolyzer, for example, a water electrolysis type hydrogen generator. In the membrane electrode assembly including the electrode structure according to the present invention, the electrolyte membrane is kept from being deteriorated, and improved in durability.

For an electrode structure for water electrolysis (hereinafter, which may be abbreviated as an "electrode structure") according to an embodiment of the present invention, an anode electrode and a cathode electrode are disposed to face each other, and at least one of the anode electrode and the cathode electrode has a porous component and a reticular component in order from the facing surface side. Hereinafter, the facing surface between the anode electrode and the cathode electrode may be abbreviated as a "facing surface".

Further, the electrode structure according to the embodiment of the present invention is characterized in that the standard deviation of the pressure distribution at the surface of contact between the anode electrode and the cathode electrode, determined by the following measurement method, is 2.7 MPa or less.

<Measurement Method>

After a test piece that has a pressure measurement film sandwiched between the anode electrode and the cathode electrode of the electrode structure is pressurized at 4 MPa for 2 minutes, the pressure distribution obtained by a pressure analysis from a color image of the pressure measurement film, obtained from a pressure image analysis system, is defined as a pressure distribution at the surface of contact between the anode electrode and the cathode electrode, and the standard deviation of the pressure distribution is determined. A more specific measurement method will be described in examples.

From the viewpoint of keeping the electrolyte membrane from being deteriorated, the standard deviation of the pressure distribution is preferably 2.5 MPa or less, more preferably 2.1 MPa or less, still more preferably 1.8 MPa or

less, particularly preferably 1.5 MPa or less in the electrode structure according to the embodiment of the present invention. The pressure distribution is preferably as uniform as possible. The lower limit of the standard deviation of the pressure distribution is not particularly limited, but is preferably 0.1 MPa or more.

The large standard deviation of the pressure distribution means that a relatively high pressure is locally applied to the electrolyte membrane. In this case, the electrolyte membrane is prone to be deteriorated as described above. The mechanism is not clear, but is presumed as follows. When a high pressure is locally applied to the electrolyte membrane on the anode side, the region will have a high potential, thereby generating heat and then deteriorating the electrolyte membrane. In contrast, when a high pressure is locally applied to the electrolyte membrane on the cathode side, the current will be deficient in the low pressure region between the high pressure region and the high pressure region, thereby decreasing the hydrogen generation efficiency, and as a result, the by-production of hydrogen peroxide by the reaction between hydrogen and oxygen will be promoted, and the hydrogen peroxide will deteriorate the electrolyte membrane.

In the electrode structure according to the embodiment of the present invention, the standard deviation of the pressure distribution is equal to or less than the upper limit mentioned above, and thus, such an action as mentioned above is considered allowed to be kept from working. Thus, a high pressure can be prevented from being locally applied to the electrolyte membrane.

In addition, the lowest value of the pressure (hereinafter, referred to as a "lowest pressure") in the pressure distribution obtained by the measurement method is preferably 0.7 MPa or more, more preferably 1.0 MPa or more, still more preferably 2.0 MPa or more, particularly preferably 2.5 MPa or more. The lowest pressure means the lowest pressure at the surface of contact between the anode electrode and the cathode electrode. The lowest pressure mentioned above is set to 0.7 MPa or more, thereby keeping the electrolyte membrane from being deteriorated in the low pressure region on the cathode side. The mechanism is not clear, but is presumed as follows. The lowest pressure is set to 0.7 MPa or more, thereby keeping the current from being deficient in the low pressure region on the cathode side, maintaining the hydrogen generation efficiency, and inhibiting the by-production of hydrogen peroxide. As a result, the electrolyte membrane is considered allowed to be kept from being deteriorated.

In addition, the electrode structure according to the embodiment of the present invention gives favorable water electrolysis performance when the electrode structure is applied to a water electrolyzer. One index for measuring the water electrolysis performance is an initial applied voltage to the cell, and the water electrolysis performance is better as the initial applied voltage is lower. When a high pressure is locally applied to the electrolyte membrane on the anode side, the electrolytic reaction may be insufficiently developed in the low pressure region between the high pressure region and the high pressure region, and the reduced electrolysis region may increase the current density when the same current is allowed to flow, thus increasing the electrolysis voltage. This means that water electrolysis performance is degraded. In the electrode structure according to the embodiment of the present invention, a high pressure is kept from being locally applied to the electrolyte membrane, thus keeping the water electrolysis performance from being degraded as mentioned above.

The electrode structure according to the embodiment of the present invention includes (1) a form in which both the anode electrode and the cathode electrode each have a porous component and a reticular component in order from the facing surface side, and (2) a form in which either one of the anode electrode and the cathode electrode has a porous component and a reticular component in order from the facing surface side.

Furthermore, examples of the form (2) (2-1) include a form in which the other electrode is composed of only a porous component, and (2-2) a form in which the other electrode has a porous component and a non-reticular porous component in order from the facing surface side. In the form (2-1), a separator component or the like disposed outside the porous component, which is an electrode, is provided with a water/gas flow path. In the form (2-2), the non-reticular porous component functions as a water/gas flow path forming component. In this regard, the non-reticular porous component means a component that is different in shape from the reticular component.

As the electrode structure according to the embodiment of the present invention, the forms of (1) and (2-2) are preferred, and the form of (1) is particularly preferred.

The forms of (1) and (2-2) will be specifically described with reference to Figs. 1 to 3. Fig. 1 shows an example of the form (1), and Figs. 2 and 3 show examples of the form (2-2).

An electrode structure 1 shown in Fig. 1 has an anode electrode 10 and a cathode electrode 20 disposed to face each other, the anode electrode 10 has a porous component 11 and a reticular component 12 in order from the facing surface side, and the cathode electrode 20 has a porous component 21 and a reticular component 22 in order from the facing surface side.

An electrode structure 2 shown in Fig. 2 has an anode electrode 10 and a cathode electrode 20 disposed to face each other, the anode electrode 10 has a porous component 11 and a reticular component 12 in order from the facing surface side, and the cathode electrode 20 has a porous component 21 and a non-reticular porous component 23 in order from the facing surface side.

An electrode structure 3 shown in Fig. 3 has an anode electrode 10 and a cathode electrode 20 disposed to

face each other, the anode electrode 10 has a porous component 11 and a non-reticular porous component 13 in order from the facing surface side, and the cathode electrode 20 has a porous component 21 and a reticular component 22 in order from the facing surface side.

For the electrode structure according to the embodiment of the present invention, an anode catalyst layer may be stacked on the facing surface side of the porous component constituting the anode electrode, and a cathode catalyst layer may be stacked on the facing surface side of the porous component constituting the cathode electrode. Details thereof will be described later.

[Reticular components (reference numerals 12 and 22 in Figs. 1 to 3)]

The reticular component functions as a flow path forming component for water or gas.

The reticular component preferably has conductivity, and the material thereof is preferably a metal. In addition, the reticular component is preferably made of a metal from the viewpoint of durability and securement of a water/gas flow path. More specifically, the reticular component is preferably a reticular metal component.

Examples of the metal constituting the reticular metal component include titanium, nickel, aluminum, stainless steel, and an alloy containing at least one of these metals as a main constituent. Examples of the other metal contained in, for example, an alloy containing titanium as a main constituent (hereinafter referred to as a "titanium alloy") include aluminum, vanadium, palladium, molybdenum, chromium, and niobium. In addition, for enhancing the conductivity of the reticular metal component, the reticular metal component is preferably coated with a noble metal such as gold or platinum by plating or the like.

As the metal constituting the reticular metal component used for the anode electrode, titanium, nickel, aluminum, and an alloy containing at least one of these metals as a main constituent, which are excellent in corrosion resistance under environments such as at a high potential, in the presence of oxygen, and in strong acidity, are preferred, and titanium and a titanium alloy are particularly preferred.

The metal constituting the reticular metal component used for the cathode electrode is not particularly limited, but titanium, nickel, aluminum, stainless steel, and an alloy containing at least one of these metals as a main constituent are preferred, and titanium and a titanium alloy are particularly preferred.

As a material other than the metal for the reticular component, for example, conductive non-metallic materials such as carbon fibers or conductive resins can be used. In addition, a non-metallic material such as a nonconductive resin, coated with a noble metal such as gold or platinum, can also be used.

Hereinafter, a reticular metal component will be described as a representative example of the reticular component, but the present invention is not limited thereto.

Examples of the reticular metal component include a metal mesh, an expanded metal, and a punching metal. Among these examples, a metal mesh or expanded metal is preferably used. The metal mesh, the expanded metal, and the punching metal can be used as a single sheet or a laminate of multiple sheets. The laminate may be a laminate of different types, for example, a laminate of a metal mesh and an expanded metal.

[Porous components (reference numerals 11 and 21 in Figs. 1 to 3)]

Examples of the porous component include a metal porous substrate and a carbon porous substrate. Examples of the metal porous substrate include a metal nonwoven fabric, a metal fiber sintered body, a metal powder sintered body, a metal foam sintered body, and a fine mesh-like woven fabric of metal fibers, and examples of the metal constituting the metal porous substrate include titanium, nickel, aluminum, stainless steel, and an alloy containing at least one of these metals as a main constituent. Examples of the carbon porous substrate include carbon felt, carbon paper, carbon cloth, and a graphite particle sintered body. In addition, for enhancing the conductivity of the porous component, the porous component is preferably coated with a noble metal such as gold or platinum by plating or the like.

As the porous component used for the anode electrode, metal porous substrates, which are excellent in corrosion resistance under environments such as at a high potential, in the presence of oxygen, and in strong acidity, are preferred. As the metal constituting such a metal porous substrate, titanium, nickel, aluminum, stainless steel, and an alloy containing at least one of these metals as a main constituent are preferred, and titanium and a titanium alloy are particularly preferred.

The porous component used for the cathode electrode is not particularly limited, and the metal porous substrate and carbon porous substrate mentioned above can be used. Among these substrates, the carbon porous substrate is preferred, and carbon paper is further preferred.

The porous component preferably functions as a gas diffusion layer. From this viewpoint, the average pore size of the porous component is preferably 0.1 to 70 um, more preferably 1 to 60 um, particularly preferably 2 to 50 um.

The Young's modulus of the porous component in the film thickness direction thereof preferably falls within the range of 10 to 200 MPa, more preferably the range of 20 to 150 MPa.

When the porous component is composed of fibers, the fiber diameter thereof is preferably 100 um or less,

more preferably 30 um or less, particularly preferably 20 um or less.

When the porous component is a metal powder sintered body, the grain size thereof is preferably 100 um or less, more preferably 30 um or less, particularly preferably 20 um or less.

When the porous component is a fine mesh-like woven fabric of metal fibers, the mesh count is preferably 220 or more, more preferably 250 or more, particularly preferably 300 or more.

The porosity of the porous component is preferably 10 to 95%, more preferably 20 to 90%, particularly preferably 30 to 85%.

[Non-reticular porous components (reference numerals 13 and 23 in Figs. 2 and 3]

The material of the non-reticular porous component is not particularly limited, but a metal is preferred from the viewpoints of conductivity and flow path formation. More specifically, a non-reticular porous metal component is preferred as the non-reticular porous component. Hereinafter, a non-reticular porous metal component will be described as a representative example of the non-reticular porous component, but the present invention is not limited thereto.

Examples of the non-reticular porous metal component include a metal nonwoven fabric, a metal fiber sintered body, a metal powder sintered body, and a metal foam sintered body. Examples of the metal constituting the non-reticular porous metal component include titanium, nickel, aluminum, stainless steel, and an alloy containing at least one of these metals as a main constituent, and titanium and a titanium alloy are particularly preferred. In addition, for enhancing the conductivity of the non-reticular porous metal component, the non-reticular porous metal component is preferably coated with a noble metal such as gold or platinum by plating or the like.

The non-reticular porous metal component preferably functions as a water/gas flow path forming component, and from this viewpoint, the average pore size is preferably relatively large. Specifically, the average pore size of the non-reticular porous metal component is preferably 70 to 2,000 um, more preferably 100 to 1,000 um, particularly preferably 150 to 800 um.

The non-reticular porous metal component is preferably larger in average pore size than the metal porous substrate for use as the above-described porous component (reference numerals 11 and 21 in Figs. 1 to 3).

[Configuration Example of Electrode Structure]

There is no particular limitation for obtaining the electrode structure in such a form as mentioned above in which the standard deviation of the pressure distribution at the surface contact between the anode electrode and the cathode electrode is 2.7 MPa or less, but for example, at least one of the following configuration examples can be employed as an example. The present invention is, however, not limited thereto.

<Configuration Example 1>

The first configuration is the increased thickness of the porous component. Specifically, the thickness of the porous component is preferably more than 500 um. The use of the porous component with such a thickness tends to reduce the standard deviation of the pressure distribution. Furthermore, the thickness is more preferably more than 700 um, particularly preferably more than 1,000 um. In addition, the thickness is preferably 2,500 um or less, more preferably 2,000 um or less, particularly preferably 1,700 um or less from the viewpoint of maintaining favorable conductivity.

The porous component within the thickness range mentioned above is preferably used for at least one of the anode electrode and the cathode electrode, and particularly preferably used for each of the both electrodes. When the both electrodes each include the porous component, the total thickness of the porous components included in the both electrodes is preferably more than 1,000 um, more preferably more than 1,300 um, still more preferably more than 1,500 um, particularly preferably more than 1,700 um. The total thickness is preferably 5,000 um or less, more preferably 4,000 um or less, particularly preferably 3,400 um or less. When the total thickness of the porous components included in the both electrodes is more than 1,000 um, the standard deviation of the pressure distribution can be made smaller than the upper limit mentioned above, as long as the porous component of one of the electrodes is more than 400 um in thickness.

More preferably, the porous component constituting the anode electrode includes a metal porous substrate, whereas the porous component constituting the cathode electrode includes a carbon porous substrate. Further, the thickness of each of the metal porous substrate and the carbon porous substrate is preferably more than 500 um, more preferably more than 700 um, particularly preferably more than 1,000 um. Each of the thicknesses is preferably 2,500 um or less, more preferably 2,000 um or less, and particularly preferably 1,700 um or less.

<Configuration Example 2>

The second configuration is the fine mesh of the reticular metal component. Specifically, the mesh count of the reticular metal component is preferably 10 or more, more preferably 23 or more, particularly preferably 25 or more. The use of such a reticular metal component tends to reduce the standard deviation of the pressure distribution. On the other hand, the mesh count is preferably 200 or less, more preferably 150 or less, still more preferably 100 or less, particularly preferably 70 or less from the viewpoint of securing a water/gas flow path. The mesh count is the number of openings in 1 inch (25.4 mm), and can be determined from the opening size (mm) and the wire diameter (mm) by the following formula:

$$\text{Mesh Count} = 25.4/(\text{opening size} + \text{wire diameter})$$

Further, the expanded metal is processed into a rhombic or tortoiseshell reticular shape by a method of stretching a metal material with staggered cuts. The mesh count of such an expanded metal is, as shown in Fig. 4, the number of openings within 1 inch (25.4 mm) of a reference line L drawn in parallel with any one side of the opening (rhombus), and can be determined by the formula mentioned above. In this regard, the dimension M is (opening size + wire diameter) in the formula mentioned above.

In addition, the mesh of the reticular metal component may be adjusted with the use of multiple reticular metal sheets. Specifically, for example, the reticular metal component is preferably obtained by laminating multiple reticular metal sheets that are different in mesh count. In this case, the reticular metal sheet with the largest mesh count is preferably disposed on the facing surface side. In the case of laminating three or more reticular metal sheets, the mesh count is preferably gradually reduced in order from the facing surface side. The laminated configuration mentioned above tends to reduce the standard deviation of the pressure distribution.

The mesh count of each of the multiple reticular metal sheets used in this laminated configuration is preferably appropriately adjusted within the range of 10 to 200, more preferably appropriately adjusted within the range of 10 to 150. Specifically, it is preferable to dispose the reticular metal sheet with a mesh count of 30 or more and 200 or less (preferably 150 or less) at a position closest to the facing surface, and dispose the reticular metal sheet with a mesh count of 10 or more and less than 30 at a position farthest from the facing surface.

Even in the case of using such a reticular metal component as mentioned above, the thickness of the porous component disposed on the facing surface side of the reticular metal component is preferably relatively large from the viewpoint of further reducing the standard deviation of the pressure distribution. Specifically, the thickness is preferably more than 250 um, more preferably more than 500 um, particularly preferably more than 700 um.

<Configuration Example 3>

The third configuration is the adjusted Young's modulus and porosity of the porous component. Specifically, the porous component preferably includes multiple porous substrates that are different in Young's modulus or porosity in the film thickness direction from each other. The use of a porous component that has such a configuration of multiple porous substrates stacked tends to reduce the standard deviation of the pressure distribution.

For example, in the case of stacking porous substrates with the Young's modulus in the range of 10 to 200 MPa, the difference in Young's modulus between the porous substrate with the maximum Young's modulus and the porous substrate with the minimum Young's modulus preferably falls within the range of 5 to 120 MPa, more preferably the range of 10 to 100 MPa, particularly preferably the range of 20 to 90 MPa. In addition, for example, in the case of stacking porous substrates with the porosity in the range of 10 to 95%, the difference in porosity between the porous substrate with the maximum porosity and the porous substrate with the minimum porosity preferably falls within the range of 5 to 70%, more preferably the range of 10 to 60%, particularly preferably the range of 15 to 50%.

The Young's modulus is determined from the slope of a 1 approximate straight line where the horizontal axis indicates strain, whereas the vertical axis indicates stress, by performing a pressure test on a test piece of 20 mm on a side at a stroke speed of 0.02 mm/min from 0.5 MPa to 4 MPa under a normal temperature atmosphere (23°C, 55% RH) in a compression tester.

Even in the case of using a porous component that has the stacked configuration mentioned above, the thickness of the porous component (the total thickness of the porous substrates stacked) is preferably relatively large from the viewpoint of further reducing the standard deviation of the pressure distribution. Specifically, the thickness is preferably more than 300 um, more preferably more than 500 um, particularly preferably more than 700 um.

[Membrane Electrode Assembly]

In the case of applying the electrode structure according to the embodiment of the present invention to a water electrolyzer, an electrolyte membrane is disposed between the anode electrode and cathode electrode of the electrode constituent. Hereinafter, an assembly that has an electrolyte membrane disposed between the anode electrode and cathode electrode of the electrode structure is referred to as a "membrane electrode assembly".

[Electrolyte Membrane]

The electrolyte membrane for use in the membrane electrode assembly is not particularly limited, and electrolyte membranes known in the art can be used. Among the membranes, polymer electrolyte membranes are preferred. Examples of the polymer electrolytes include hydrocarbon polymer electrolytes and fluoropolymer electrolytes. In a water electrolyzer, the electrolyte membrane preferably has a high hydrogen barrier property and high water electrolysis performance, and from these viewpoints, the hydrocarbon polymer electrolytes are preferably used. These polymer electrolytes contain ionic groups such as a sulfonic acid group, a sulfonimide group, a sulfuric acid group, and a phosphonic acid group.

The fluoropolymer in the fluoropolymer electrolyte means a polymer in which most or all of hydrogen atoms in an alkyl group and/or an alkylene group in a molecule are substituted with fluorine atoms.

Examples of the fluoropolymer electrolyte include perfluorocarbon sulfonic acid polymers, perfluorocarbon phosphonic acid polymers, trifluorostyrene sulfonic acid polymers, trifluorostyrene phosphonic acid polymers, ethylene tetrafluoroethylene-g-styrene sulfonic acid polymers, ethylene-tetrafluoroethylene copolymers, and polyvinylidene fluoride-perfluorocarbon sulfonic acid polymers.

Among these examples, perfluorocarbon sulfonic acid polymers are preferred from the viewpoint of heat resistance, chemical stability, and the like, and examples of the polymers can include commercially available products such as "Nafion" (registered trademark) (manufactured by The Chemours Company), "FLEMION" (registered trademark) (manufactured by AGC Inc.), and "Aciplex" (registered trademark) (manufactured by Asahi Kasei Corporation).

The hydrocarbon polymer electrolyte is preferably an aromatic hydrocarbon polymer having an aromatic ring in the main chain. The aromatic ring may include not only a hydrocarbon aromatic ring but also a hetero ring. In addition, the polymer may be partially formed from an aliphatic unit together with the aromatic ring unit.

Specific examples of the aromatic hydrocarbon polymer include polymers having, in the main chain, a structure selected from polysulfone, polyether sulfone, a polyphenylene oxide, a polyarylene ether polymer, polyphenylene sulfide, polyphenylene sulfide sulfone, polyparaphenylene, a polyarylene polymer, polyarylene ketone, polyether ketone, a polyarylene phosphine oxide, a polyether phosphine oxide, polybenzoxazole, polybenzothiazole, polybenzimidazole, polyamide, polyimide, polyetherimide, and polyimidesulfone together with an aromatic ring. It is to be noted that the polysulfone, polyether sulfone, polyether ketone, and the like referred to herein are generic terms for structures having a sulfone bond, an ether bond, or a ketone bond in their molecular chains, and encompass polyether ketone ketone, polyether ether ketone, polyether ether ketone ketone, polyether ketone ether ketone ketone, and polyether ketone sulfone and the like. The hydrocarbon skeleton may have multiple structures among these structures. Above all, in particular, a polymer having a polyether ketone skeleton, that is, a polyether ketone polymer is most preferred for the aromatic hydrocarbon polymer.

The ionic group may be an ionic group having either a cation exchange ability or an anion exchange ability. As such a functional group, a sulfonic acid group, a sulfonimide group, a sulfuric acid group, a phosphonic acid group, a phosphoric acid group, a carboxylic acid group, an ammonium group, a phosphonium group, and an amino group are preferably used. Above all, at least one selected from a sulfonic acid group, a sulfonimide group, and a sulfuric acid group is preferred because of the excellent water electrolysis performance, and a sulfonic acid group is most preferred from the viewpoint of raw material cost. In addition, the polymer may contain two or more types of ionic groups.

The aromatic hydrocarbon polymer is, furthermore, preferably a block copolymer having each of a segment containing an ionic group (ionic segment) and a segment containing no ionic group (nonionic segment). The segment herein represents a partial structure in a polymer chain of a copolymer, including repeating units that exhibit specific properties, with a molecular weight of 2,000 or more. The use of the block copolymer improves the water electrolysis performance, the hydrogen generation efficiency, and the physical durability.

As the block copolymer mentioned above, a polyether ketone block copolymer containing the following: an ionic segment including a constituent unit (S1) and a nonionic segment including a constituent unit (S2) is particularly preferred.

[Chemical Formula 1]

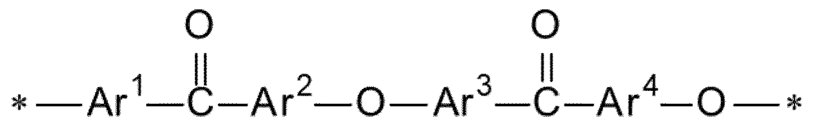

(S1)

In the general formula (S1), $Ar^1$ to $Ar^4$ each represent any divalent arylene group, $Ar^1$ and/or $Ar^2$ contains an ionic group, and $Ar^3$ and $Ar^4$ may contain an ionic group or contain no ionic group. $Ar^1$ to $Ar^4$ may be optionally substituted, and may each independently have two or more types of arylene groups. The symbol * represents a binding site to the constituent unit of the general formula (S1) or another constituent unit.

[Chemical Formula 2]

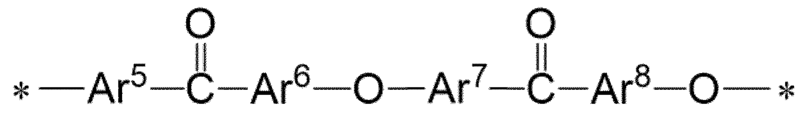

(S2)

In the general formula (S2), $Ar^5$ to $Ar^8$ each represent any divalent arylene group, and may be optionally substituted, but contain no ionic group. $Ar^5$ to $Ar^8$ may each independently have two or more types of arylene groups. The symbol * represents a binding site to the constituent unit of the general formula (S2) or another constituent unit.

In this regard, examples of the divalent arylene group preferred for $Ar^1$ to $Ar^8$ include, but are not limited thereto, hydrocarbon arylene groups such as a phenylene group, a naphthylene group, a biphenylene group, and a fluorenediyl group, and heteroarylene groups such as pyridinediyl, quinoxalinediyl, and thiophenediyl. In this regard, the "phenylene group" can be three types of phenylene groups: an o-phenylene group; a m-phenylene group; and a p-phenylene group, depending on the position of the binding site between the benzene ring and another constituent unit, and the term "phenylene group" is used as a generic term for these groups, unless otherwise particularly limited in this specification. The same applies to the other divalent arylene groups, such as the "naphthylene group" and the "biphenylene group".

$Ar^1$ to $Ar^8$ are each preferably a phenylene group, and most preferably a p-phenylene group. In addition, $Ar^5$ to $Ar^8$ may be substituted with a group other than an ionic group, but are more preferably unsubstituted groups in terms of proton conductivity, chemical stability, and physical durability.

The ion exchange capacity (IEC) of the hydrocarbon polymer electrolyte included in the electrolyte membrane preferably falls within the range of 1.5 to 2.7 meq/g, more preferably within the range of 1.6 to 2.5 meq/g, particularly preferably within the range of 1.7 to 2.4 meq/g. The ion exchange capacity of the hydrocarbon polymer electrolyte can be adjusted by controlling the density of ionic groups, for example, sulfonic acid groups, in the polymer.

The weight average molecular weight of the hydrocarbon polymer electrolyte is preferably 250,000 or more, more preferably 300,000 or more, particularly preferably 350,000 or more. The upper limit of the weight average molecular weight is about 1,500,000.

The electrolyte membrane can contain various additives, for example, a surfactant, a radical scavenger, a hydrogen peroxide decomposer, a non-electrolyte polymer, an elastomer, a filler, and the like, to the extent that the present invention is not impaired.

The electrolyte membrane preferably includes a porous reinforce component in the membrane. Examples of the form of the porous reinforce component include a woven fabric, a nonwoven fabric, a porous film, and a mesh woven fabric. Examples of the material of the porous reinforce component include materials containing, as a main constituent, a hydrocarbon polymer such as polyolefin, polystyrene, polyester, polysulfone, polyether sulfone, polyether ketone, polyether ether ketone, polybenzoxazole, polybenzimidazole, or polyimide, for example, materials containing, as a main constituent, a fluoropolymer such as polytetrafluoroethylene, polyhexafluoropropylene, a tetrafluoroethylene-hexafluoropropylene copolymer, an ethylene-tetrafluoroethylene copolymer, or polyvinylidene fluoride.

Among the porous reinforce components mentioned above, the mesh woven fabric is preferred, which achieves a relatively high reinforcing effect, and polyester, liquid crystal polyester, polyphenylene sulfide, polyether ketone, polyether ether ketone, and polyether ketone ketone are preferably used as a material of fibers constituting the mesh woven fabric.

The thickness of the electrolyte membrane is preferably 40 to 200 um, more preferably 50 to 170 um, particularly preferably 60 to 150 um from the viewpoints of hydrogen barrier property and durability.

[Catalyst Layer]

As described above, for the electrode structure according to the embodiment of the present invention, an anode catalyst layer may be stacked on the facing surface side of the porous component constituting the anode electrode, and a cathode catalyst layer may be stacked on the facing surface side of the porous component constituting the cathode electrode.

On the other hand, as the electrolyte membrane constituting the membrane electrode assembly according to the embodiment of the present invention, a catalyst-coated electrolyte membrane (CCM), with a catalyst layer on each of both surfaces of the membrane, can be used. The catalyst-coated electrolyte membrane (CCM) has an anode catalyst layer and a cathode catalyst layer stacked respectively on the anode electrode side of the electrolyte membrane and on the cathode electrode side thereof. When the catalyst-coated electrolyte membrane is used, the catalyst layers can be omitted in the electrode structure according to the embodiment of the present invention. In addition, as a form of the catalyst layers, the electrode structure according to the present invention may include either one catalyst layer of the anode catalyst layer and the cathode catalyst layer, and the other catalyst layer may be stacked on the electrolyte membrane.

The electrolyte membrane constituting the membrane electrode assembly according to the embodiment of the present invention is preferably a catalyst-coated electrolyte membrane from the viewpoints of production cost, water electrolysis performance, and durability.

The catalyst layer is typically a layer including catalyst particles and a polymer electrolyte. As the polymer electrolyte, the fluoropolymer electrolyte or hydrocarbon polymer electrolyte described above can be used, and the fluoropolymer electrolyte is preferred from the viewpoint of gas diffusibility.

As the catalyst particles, metals such as platinum group elements (platinum, ruthenium, rhodium, palladium, osmium, iridium), iron, lead, gold, silver, copper, chromium, cobalt, nickel, manganese, vanadium, molybdenum, gallium, and aluminum, or alloys thereof, or oxides, double oxides, and the like thereof are typically used, and carbon particles supporting the metals (catalyst supported carbon particles) and metal oxides supporting the metals (catalyst supported metal oxide particles) are also typically used. The carbon particles are not particularly limited as long as the particles have conductivity in the form of fine particles, and are not corroded or deteriorated by a reaction with the catalyst, and carbon particles such as carbon black, graphite, activated carbon, carbon fibers, carbon nanotubes, and fullerene particles can be used. The catalyst-supported metal oxide is not particularly limited as long as the oxide has conductivity in the form of fine particles, and are not corroded or deteriorated by a reaction with the catalyst, and oxides of titanium, copper, zirconium, niobium, molybdenum, indium, tin, antimony, cerium, holmium, tantalum, tungsten, bismuth, and an ITO can be used. The average particle size of the catalyst particles is preferably 0.5 nm or more and 20 nm or less, more preferably 1 nm or more and 5 nm or less.

The anode catalyst layer and the cathode catalyst layer may be made of the same material, or may be made of different materials. In the case of being applied to a water electrolyzer, the anode catalyst layer and the cathode catalyst layer are preferably made of different materials. For example, for the anode catalyst layer, it is preferable to use, as catalyst particles, a noble metal such as iridium, ruthenium, rhodium, or palladium, or an alloy, an oxide, or a double oxide thereof, or a titanium oxide supporting the noble metal, or the alloy, oxide, or double oxide thereof. Among these materials, the iridium oxide is particularly preferred from the viewpoint of water electrolysis performance. For the cathode catalyst layer, it is preferable to use platinum supported carbon particles as catalyst particles.

In the catalyst layer, the ratio by mass of the content of the catalyst particles to the content of the polymer electrolyte (the mass of the catalyst particles/the mass of the polymer electrolyte) preferably falls within the range of 1.0 to 20.0, more preferably the range of 1.5 to 18.0, still more preferably the range of 2.1 to 15.0, particularly preferably the range of 3.0 to 13.0.

The thickness of the catalyst layer preferably falls within the range of 1 to 30 um, more preferably the range of 2 to 25 um, particularly preferably the range of 3 to 20 um from the viewpoints of gas diffusibility and durability.

[Application Example]

The electrode structure according to the present invention and the membrane electrode assembly with the electrode structure used are suitable for water electrolyzers, and particularly suitable for water electrolysis type hydrogen generators. In addition, the electrode structure according to the present invention and the membrane electrode assembly with the electrode structure used are not limited to the foregoing, and can also be applied to fuel cells, electrochemical hydrogen compressors, and the like.

EXAMPLES

Hereinafter, the present invention will be more specifically described with reference to examples, but the present

invention is not limited to only these examples.

[Measurement of Standard Deviation of Pressure Distribution and Lowest Pressure]

The standard deviation of the pressure distribution at the surface of contact between the anode electrode and cathode electrode of the electrode structure was determined by the following measurement method.

<Measurement Method>

Between the anode electrode and cathode electrode of the electrode assembly of 20 mm on a side, a pressure measurement film of 20 mm on a side ("Prescale" (registered trademark) manufactured by FUJIFILM Corporation, product number: for Low Pressure (LW)) was sandwiched to prepare a test piece. The test piece was sandwiched between 30 mm square metal blocks for compression test, and pressurized (at 4 MPa for 2 minutes) under a normal temperature atmosphere (23°C, 55% RH) in a compression tester. The pressure measurement film was composed of an A film (film with a color former layer applied to a substrate) and a C film (film with a color developer layer applied to a substrate), and the A film and the C film were disposed respectively on the cathode electrode side and the anode electrode side, such that substrates were brought into contact with the electrode sides.

After the pressurization, the pressure measurement film was taken out, and the colored image of the C film was measured by scanning from the substrate side (glossy surface side). This image data was analyzed with the use of a prescale pressure image analysis system ("FPD-8010J" manufactured by Fujifilm Corporation). The analysis was performed with the analysis target area set to a 10 mm square at the center, pressure data was obtained at each point of 6400 pixels obtained by dividing the analysis target area into 80 equal parts in the vertical and horizontal directions, and from the pressure data, the standard deviation of the pressure distribution was calculated. The average value of the standard deviations for three test pieces was determined, and the value was defined as the standard deviation of the pressure distribution of the electrode structure. In addition, the lowest value of the pressure in the pressure distribution was also determined from the pressure data. When the determined lowest value of the pressure is 2.5 MPa or less, pressure data is obtained in the same manner as mentioned above with the use of "Prescale" (registered trademark) manufactured by FUJIFILM Corporation, product number: Super Low Pressure (LLW), instead of the product number for low pressure (LW).

[Porous Component]

- metal porous substrate 1 (titanium 1): 300 um-thick titanium fiber sintered body plated with platinum
- metal porous substrate 2 (titanium 2): 450 um-thick titanium fiber sintered body plated with platinum
- metal porous substrate 3 (titanium 3): 750 um-thick titanium fiber sintered body plated with platinum
- carbon porous substrate 1 (carbon 1): 370 um-thick carbon paper (manufactured by Toray Industries, Inc.)
- carbon porous substrate 2 (carbon 2): 820 um-thick carbon paper (manufactured by Toray Industries, Inc.)
- carbon porous substrate 3 (carbon 3): 1,350 um-thick carbon paper (manufactured by Toray Industries, Inc.)

[Reticular Metal Component]

- platinum-plated titanium expanded metal 1: mesh count: 25, thickness: 1.2 mm
- platinum-plated titanium expanded metal 2: mesh count: 60, thickness: 1.2 mm

[Example 1]

Prepared was an electrode structure with an anode electrode including the metal porous substrate 2 and the titanium expanded metal 1 from the facing surface side, and a cathode electrode including the carbon porous substrate 2 and the titanium expanded metal 1 from the facing surface side.

[Example 2]

Prepared was an electrode structure with an anode electrode including the metal porous substrate 2 and the titanium expanded metal 1 from the facing surface side, and a cathode electrode including the carbon porous substrate

3 and the titanium expanded metal 1 from the facing surface side.

[Example 3]

Prepared was an electrode structure with an anode electrode including the metal porous substrate 3 and the titanium expanded metal 1 from the facing surface side, and a cathode electrode including the carbon porous substrate 2 and the titanium expanded metal 1 from the facing surface side.

[Example 4]

Prepared was an electrode structure with an anode electrode including the metal porous substrate 3 and the titanium expanded metal 1 from the facing surface side, and a cathode electrode including the carbon porous substrate 3 and the titanium expanded metal 1 from the facing surface side.

[Example 5]

Prepared was an electrode structure with an anode electrode including the metal porous substrate 1, the titanium expended metal 2, and the titanium expanded metal 1 from the facing surface side, and a cathode electrode including the carbon porous substrate 2, the titanium expanded metal 2, and the titanium expanded metal 1 from the facing surface side.

[Example 6]

Prepared was an electrode structure with an anode electrode including the metal porous substrate 3, the titanium expended metal 2, and the titanium expanded metal 1 from the facing surface side, and a cathode electrode including the carbon porous substrate 3, the titanium expanded metal 2, and the titanium expanded metal 1 from the facing surface side.

[Comparative Example 1]

Prepared was an electrode structure with an anode electrode including the metal porous substrate 1 and the titanium expanded metal 1 from the facing surface side, and a cathode electrode including the carbon porous substrate 1 and the titanium expanded metal 1 from the facing surface side.

[Evaluation]

The standard deviation of the pressure distribution and the lowest pressure were determined for the electrode structures obtained according to the examples and comparative example mentioned above. The results are shown in Table 1.

[Table 1]

| | Anode electrode | | | | | Cathode electrode | | | | | Evaluation | |
|---|---|---|---|---|---|---|---|---|---|---|---|---|
| | Porous component | | Reticular metal component | | | Porous component | | Reticular metal component | | | Standard deviation of pressure distribution (Mpa) | Lowest pressure (MPa) |
| | Type | Thickness (pm) | Type | Mesh count | Thickness (mm) | Type | Thickness (pm) | Type | Mesh count | Thickness (mm) | | |
| Example 1 | Titanium 2 | 450 | 1 | 25 | 1.2 | Carbon 2 | 820 | 1 | 25 | 1.2 | 2.6 | 0 . 9 |
| Example 2 | Titanium 2 | 450 | 1 | 25 | 1.2 | Carbon 3 | 1,350 | 1 | 25 | 1.2 | 1.7 | 2.1 |
| Example 3 | Titanium 3 | 750 | 1 | 25 | 1.2 | Carbon 2 | 820 | 1 | 25 | 1.2 | 2.0 | 1.5 |
| Example 4 | Titanium 3 | 750 | 1 | 25 | 1.2 | Carbon 3 | 1,350 | 1 | 25 | 1.2 | 1.2 | 2.4 |
| Example 5 | Titanium 1 | 300 | 1 + 2 2 on facing surface side | 25/60 | 1.2/1.2 | Carbon 2 | 820 | 1 + 2 2 on facing surface side | 25/60 | 1.2/1.2 | 2.3 | 1.3 |
| Example 6 | Titanium 3 | 750 | 1 + 2 2 on facing surface side | 25/60 | 1.2/1.2 | Carbon 3 | 1,350 | 1 + 2 2 on facing surface side | 25/60 | 1.2/1.2 | 1.0 | 3.0 |
| Comparative Example 1 | Titanium 1 | 300 | 1 | 25 | 1.2 | Carbon 1 | 370 | 1 | 25 | 1.2 | 2.9 | 0.5 |

[Examples 11 to 16 and Comparative Example 11: Preparation of Membrane Electrode Assembly]

In evaluating the performance of the electrode structure, a catalyst-coated electrolyte membrane (CCM) was prepared in the following manner, and the catalyst-coated electrolyte membrane (CCM) was disposed between the anode electrode and cathode electrode of the electrode structure to prepare a membrane electrode assembly.

[Preparation of Electrolyte Membrane]

<Synthesis of Polyether Ketone Block Copolymer b1>

<Synthesis Example 1>

(Synthesis of 2,2-bis(4-hydroxyphenyl)-1,3-dioxolane (K-DHBP) represented by the following Formula (G1))

In a 500-mL flask equipped with a stirrer, a thermometer, and a distillation tube, 49.5 g of 4,4'-dihydroxybenzophenone, 134 g of ethylene glycol, 96.9 g of trimethyl orthoformate, and 0.50 g of p-toluenesulfonic acid monohydrate were prepared and dissolved. Thereafter, the solution was stirred while being kept at the temperature of 78 to 82°C for 2 hours. Furthermore, the internal temperature was gradually raised up to 120°C, and the heating was continued until the distillation of methyl formate, methanol, and trimethyl orthoformate was completely stopped. The reaction liquid was cooled to room temperature, then the reaction liquid was diluted with ethyl acetate, the organic layer was washed with 100 mL of a 5% aqueous potassium carbonate solution, and after separating the solution, the solvent was distilled off. To the residue, 80 mL of dichloromethane was added to deposit crystals, and the crystals were filtered and dried to give 52.0 g of 2,2-bis(4-hydroxyphenyl)-1,3-dioxolane. The crystals were analyzed by GC to find that the crystals were 99.8% of 2,2-bis(4-hydroxyphenyl)-1,3-dioxolane and 0.2% of 4,4'-dihydroxybenzophenone.

[Chemical Formula 3]

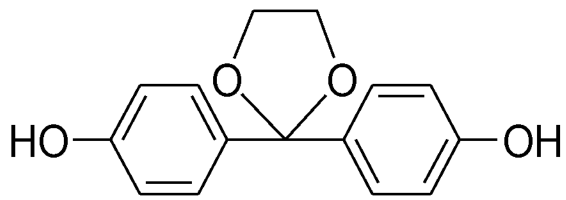

(G1)

<Synthesis Example 2>

(Synthesis of disodium-3,3'-disulfonate-4,4'-difluorobenzophenone represented by the following general formula (G2))

In 150 mL of fuming sulfuric acid (50% $SO_3$) (Wako Pure Chemical reagent), 109.1 g of 4,4'-difluorobenzophenone (Aldrich reagent) was reacted at 100°C for 10 hours. Thereafter, the resulting product was gradually poured into a large amount of water, and neutralized with NaOH, and then 200 g of sodium chloride (NaCl) was added to the neutralized product to precipitate a synthesized product. The obtained precipitate was filtered off and recrystallized from an aqueous ethanol solution to give the disodium-3,3'-disulfonate-4,4'-difluorobenzophenone represented by the following chemical formula (G2). The purity was 99.3%.

[Chemical Formula 4]

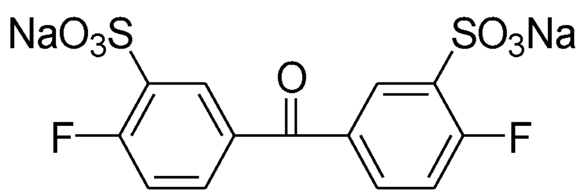

(G2)

<Synthesis Example 3>

(Synthesis of nonionic group oligomer a1 represented by the following general formula (G3))

In a 2000-mL SUS polymerizer equipped with a stirrer, a nitrogen introduction tube, and a Dean-Stark trap, 16.59 g of potassium carbonate (Aldrich reagent, 120 mmol), 25.83 g (100 mmol) of the K-DHBP obtained in Synthesis Example 1, and 20.3 g of 4,4'-difluorobenzophenone (Aldrich reagent, 93 mmol) were put. After nitrogen substitution, 300 mL of N-methylpyrrolidone (NMP) and 100 mL of toluene were added, the mixture was dehydrated at 160°C, then the temperature was raised to remove the toluene, and the rest was subjected to polymerization at 180°C for 1 hour. The resulting product was subjected to reprecipitation for purification in a large amount of methanol to give a hydroxy-terminated form of a nonionic oligomer a1. The number average molecular weight of the hydroxy-terminated form of the nonionic oligomer a1 was 10,000.

In a 500-mL three-necked flask equipped with a stirrer, a nitrogen introduction tube, and a Dean-Stark trap, 1.1 g of potassium carbonate (Aldrich reagent, 8 mmol) and 20.0 g (2 mmol) of the hydroxy-terminated form of the nonionic oligomer a1 were put. After nitrogen substitution in the system, 100 mL of NMP and 30 mL of cyclohexane were added, the mixture was dehydrated at 100°C, and then the temperature was raised to remove the cyclohexane. Furthermore, 4.0 g of decafluorobiphenyl (Aldrich reagent, 12 mmol) was added, and the mixture was reacted at 105°C for 1 hour. The resulting product was subjected to reprecipitation for purification in a large amount of isopropyl alcohol to give the nonionic oligomer a1 (terminal: fluoro group) represented by the following general formula (G3). The number average molecular weight was 11,000.

[Chemical Formula 5]

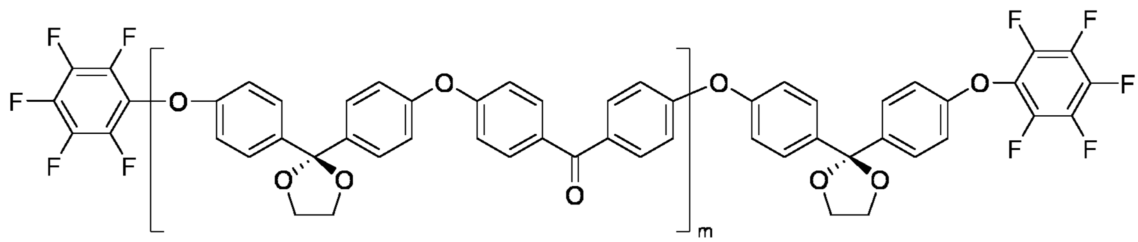

(G3)

<Synthesis Example 4>

(Synthesis of ionic oligomer a2 represented by the following general formula (G4))

In a 2,000-mL SUS polymerizer equipped with a stirrer, a nitrogen introduction tube, and a Dean-Stark trap, 27.6 g of potassium carbonate (Aldrich reagent, 200 mmol), 12.9 g (50 mmol) of the K-DHBP obtained in Synthesis Example 1, 9.3 g of 4,4'-biphenol (Aldrich reagent, 50 mmol), 40.1 g (95 mmol) of the disodium-3,3'-disulfonate-4,4'-difluorobenzophenone obtained in Synthesis Example 2, and 17.9 g of 18-crown-6 (Wako Pure Chemical Industries, Ltd., 82 mmol) were added, and after nitrogen substitution, 300 mL of NMP and 100 mL of toluene were added, the mixture was dehydrated at 150°C, the temperature was raised to remove the toluene, and the rest was subjected to polymerization at 170°C for 6 hours. The resulting product was subjected to reprecipitation for purification in a large amount of isopropyl alcohol to give the nonionic oligomer a2 (terminal: OM group) represented by the following general formula (G4). The number average molecular weight was 21,000. Further, in the formula (G4), M represents Na or K. In addition, n represents a positive integer.

[Chemical Formula 6]

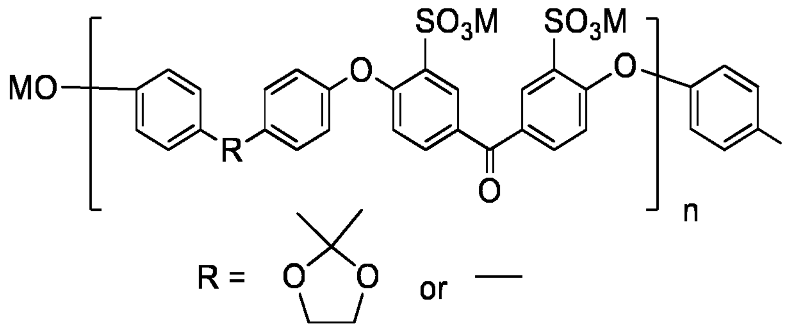

(G4)

R = or

<Synthesis Example 5>

(Synthesis of polyether ketone block copolymer b1)

In a 2,000-mL SUS polymerizer equipped with a stirrer, a nitrogen introduction tube, and a Dean-Stark trap, 0.56 g of potassium carbonate (Aldrich reagent, 4 mmol) and 21 g (1 mmol) of the ionic group-containing oligomer a2 (terminal: OM group) were added, and nitrogen substitution was performed. Thereafter, 100 mL of NMP and 30 mL of cyclohexane were added, and the mixture was dehydrated at 100°C, then, the temperature was raised to remove the cyclohexane, 11 g (1 mmol) of an oligomer a1' (terminal: fluoro group) containing no ionic group was put, and the mixture was reacted at 105°C for 24 hours. The resulting product was subjected to reprecipitation for purification in a large amount of isopropyl alcohol to give a block copolymer b1. The weight average molecular weight was 350,000. The ion exchange capacity of the block copolymer b1 was 2.10 meq/g.

[Preparation of Electrolyte Solution]

By adding 20 parts by mass of the polyether ketone block copolymer b1 to 80 parts by mass of NMP, and stirring the mixture with a stirrer at 20,000 rpm for 1 hour, a transparent solution with a polymer concentration of 20% by mass was prepared. This solution was subjected to pressure filtration with a glass fiber filter to prepare an electrolyte solution.

[Preparation of Electrolyte Membrane]

The electrolyte solution was applied to a PET film of 250 um in thickness so as to have a dry thickness of 100 μm, dried at 150°C, further subjected to an acid treatment by immersion in a 10% by mass sulfuric acid aqueous solution at 50°C for 25 minutes, washed with water, and dried to prepare an electrolyte membrane.

[Preparation of Catalyst-coated Electrolyte Membrane (CCM)]

The following anode catalyst layer and cathode catalyst layer were stacked on the electrolyte membrane prepared above to prepare a catalyst-coated electrolyte membrane. The dry thicknesses the anode catalyst layer and cathode catalyst layer were each 10 μm.

<Anode Catalyst Layer>

The anode catalyst layer includes: 10 parts by mass of catalyst particles ($IrO_2$ catalyst Elyst Ir 75 0480 manufactured by Umicore (Ir content ratio: 75%); and 1 part by mass of fluoropolymer electrolyte ("Nafion" (registered trademark) product number: D2020 manufactured by The Chemours Company) in terms of solid content.

<Cathode Catalyst Layer>

The cathode catalyst layer includes: 10 parts by mass of catalyst particles (platinum catalyst-supported carbon particles TEC10E50E manufactured by Tanaka Kikinzoku Kogyo K.K., supported platinum ratio: 50% by mass); and 5 parts by mass of fluoropolymer electrolyte ("Nafion" (registered trademark) product number: D2020 manufactured by The Chemours Company) in terms of solid content.

[Preparation of Membrane Electrode Assembly]

The catalyst-coated electrolyte membrane (CCM) was disposed between the anode electrode and cathode electrode of each of the above-mentioned electrode structures prepared according to Example 1 to 6 and Comparative Example 1 to prepare membrane electrode assemblies provided as Example 11 to 16 and Comparative Example 11.

[Evaluation of Membrane Electrode Assembly]

The membrane electrode assemblies prepared as mentioned above were each set in a JARI standard cell "Ex-1" (a platinum-coated titanium flat plate for the separator, the gasket thickness appropriately adjusted depending on the membrane electrode assembly, and electrode area: 25 $cm^2$) manufactured by Eiwa Corporation, the cell was fastened such that the average pressure applied to the CCM was 4 MPa, and the cell temperature was set to 80°C. While supplying deionized water with an electrical conductivity of 1 $\mu$S/cm or less to both the cathode electrode and the anode electrode at a flow rate of 0.2 L/min at atmospheric pressure, and a current of 2 A/$cm^2$ was applied to produce hydrogen gas and oxygen gas from a water electrolysis reaction. The initial applied voltage to the cell in this case was defined as water electrolysis performance. The water electrolysis performance is better as the initial applied voltage is lower. In addition, the increase in voltage from the initial stage in the case of continuously applying the current of 2 A/$cm^2$ for 200 hours was defined as water electrolysis durability. The water electrolysis durability is better as the increase in voltage from the initial stage is smaller. The respective results are shown in Table 2.

[Table 2]

| | Electrode structure | Applied voltage (V) | Increase in voltage (V) |
|---|---|---|---|
| Example 11 | Example 1 | 1.75 | 0.18 |
| Example 12 | Example 2 | 1.75 | 0.10 |
| Example 13 | Example 3 | 1.73 | 0.12 |
| Example 14 | Example 4 | 1.71 | 0.05 |
| Example 15 | Example 5 | 1.75 | 0.15 |
| Example 16 | Example 6 | 1.73 | 0.02 |
| Comparative Example 11 | Comparative Example 1 | 1.83 | 0.22 |

DESCRIPTION OF REFERENCE SIGNS

1, 2, 3: Electrode structure

10: Anode electrode

11, 21: Porous component

12, 22: Reticular component

13, 23: Non-reticular porous component

20: Cathode electrode

L: Reference line

M: Dimension of (opening size + wire diameter)

**Claims**

**1.** An electrode structure for water electrolysis, comprising an anode electrode and a cathode electrode disposed to

face each other,

wherein at least one of the anode electrode and the cathode electrode includes a porous component and a reticular component in order from the facing surface side, and
a standard deviation of a pressure distribution at a surface of contact between the anode electrode and the cathode electrode, determined by the following measurement method, is 2.7 MPa or less;
<Measurement Method>
after a test piece that has a pressure measurement film sandwiched between the anode electrode and the cathode electrode is pressurized at 4 MPa for 2 minutes, a pressure distribution obtained by a pressure analysis from a color image of the pressure measurement film, obtained from a pressure image analysis system, is defined as the pressure distribution at the surface of contact between the anode electrode and the cathode electrode, and the standard deviation of the pressure distribution is determined.

**2.** The electrode structure for water electrolysis according to claim 1, wherein the pressure in the pressure distribution obtained by the measurement method has a lowest value of 0.7 MPa or more.

**3.** The electrode structure for water electrolysis according to claim 1 or 2, wherein each of the anode electrode and the cathode electrode includes a porous component and a reticular component in order from the facing surface side.

**4.** The electrode structure for water electrolysis according to claim 3, wherein

the porous component of the anode electrode includes a metal porous substrate, and
the porous component of the cathode electrode includes a metal porous substrate and/or a carbon porous substrate.

**5.** The electrode structure for water electrolysis according to any one of claims 1 to 4, wherein the porous component has a thickness more than 500 μm.

**6.** The electrode structure for water electrolysis according to any one of claims 3 to 5, wherein the porous component of the anode electrode and the porous component of the cathode electrode has a total thickness more than 1,000 μm.

**7.** The electrode structure for water electrolysis according to claim 1 to 6, wherein

the reticular component is a reticular metal component,
the reticular metal component is obtained by laminating multiple reticular metal sheets that are different in mesh count, and
the reticular metal sheet on the facing surface side has a largest mesh count.

**8.** The electrode structure for water electrolysis according to claim 1 to 7, wherein the porous component includes multiple porous substrates that are different in Young's modulus or porosity from each other.

**9.** The electrode structure for water electrolysis according to any one of claims 1 to 8, wherein

the reticular component is a reticular metal component, and
a metal constituting the reticular metal component is at least one selected from the group consisting of titanium, nickel, aluminum, stainless steel, and an alloy containing at least one metal thereof as a main constituent.

**10.** The electrode structure for water electrolysis according to claim 4, wherein a metal constituting the metal porous substrate is at least one selected from the group consisting of titanium, nickel, aluminum, stainless steel, and an alloy containing at least one metal thereof as a main constituent.

**11.** A membrane electrode assembly for water electrolysis, comprising an electrolyte membrane between the anode electrode and the cathode electrode of the electrode structure for water electrolysis according to any one of claims 1 to 10.

**12.** The membrane electrode assembly for water electrolysis according to claim 11, wherein the electrolyte membrane is a catalyst-coated electrolyte membrane.

**13.** The membrane electrode assembly for water electrolysis according to claim 12, wherein

the catalyst-coated electrolyte membrane includes an anode catalyst layer on an anode electrode side and a cathode catalyst layer on a cathode electrode side,
the anode catalyst layer contains an iridium oxide and a fluoropolymer electrolyte, and
the cathode catalyst layer contains platinum supported carbon particles and a fluoropolymer electrolyte.

**14.** A water electrolyzer comprising the electrode structure for water electrolysis according to any one of claims 1 to 10.

**15.** A water electrolyzer comprising the membrane electrode assembly for water electrolysis according to any one of claims 11 to 13.

FIG. 1

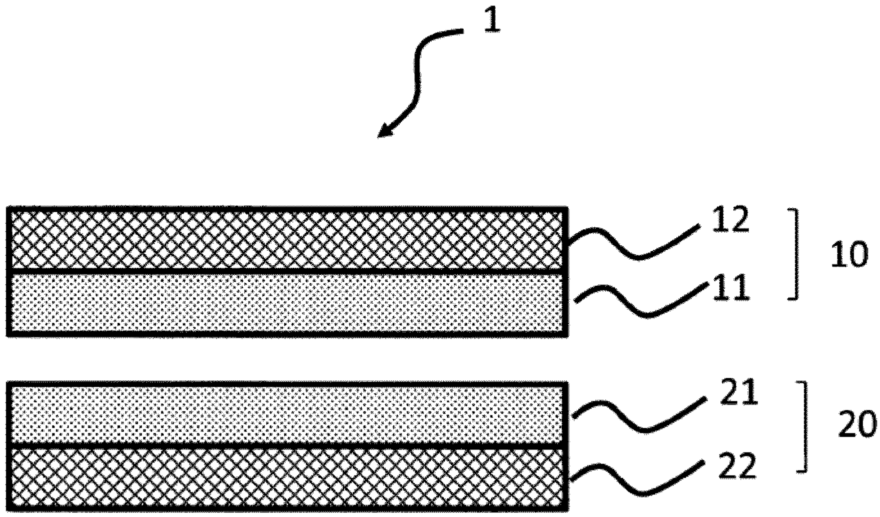


FIG. 2

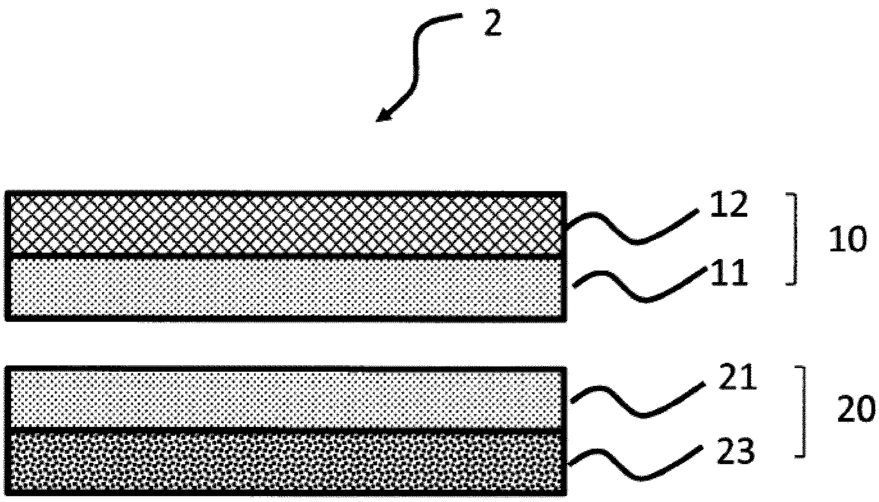

FIG. 3

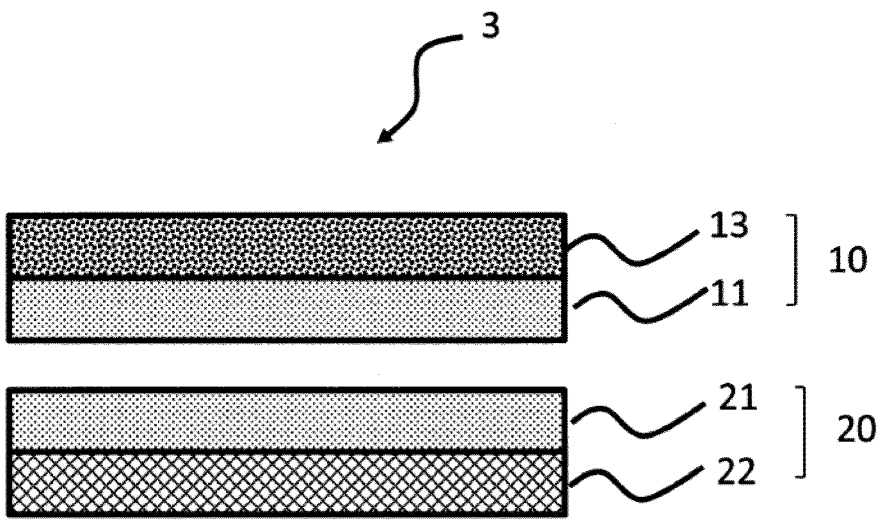


FIG. 4

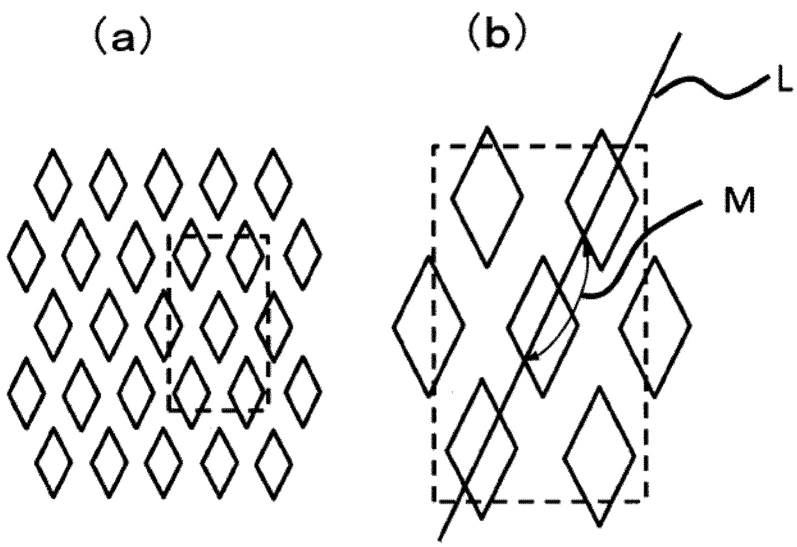

## INTERNATIONAL SEARCH REPORT

International application No. **PCT/JP2022/038689**

**A. CLASSIFICATION OF SUBJECT MATTER**

***C25B 9/23***(2021.01)i; ***C02F 1/461***(2023.01)i; ***C25B 1/04***(2021.01)i; ***C25B 9/00***(2021.01)i; ***C25B 11/032***(2021.01)i; ***C25B 11/043***(2021.01)i; ***C25B 11/046***(2021.01)i; ***C25B 11/052***(2021.01)i; ***C25B 11/061***(2021.01)i; ***C25B 11/063***(2021.01)i; ***C25B 11/081***(2021.01)i; ***C25B 13/02***(2006.01)i; ***C25B 13/08***(2006.01)i; ***H01M 4/86***(2006.01)i; ***H01M 4/96***(2006.01)i; ***H01M 8/0656***(2016.01)i; ***H01M 8/10***(2016.01)i; ***H01M 8/1004***(2016.01)i; ***H01M 8/1058***(2016.01)i

FI: C25B9/23; C25B9/00 A; C25B1/04; C25B11/032; C25B11/061; H01M8/0656; C25B11/063; C25B11/052; C25B11/081; C02F1/461 Z; H01M4/96 M; H01M4/86 B; H01M8/10 101; H01M8/1004; H01M4/96 B; H01M8/1058; C25B13/02 301; C25B13/08 301; C25B11/043; C25B11/046

According to International Patent Classification (IPC) or to both national classification and IPC

**B. FIELDS SEARCHED**

Minimum documentation searched (classification system followed by classification symbols)

C25B9/23; C02F1/461; C25B1/04; C25B9/00; C25B11/032; C25B11/043; C25B11/046; C25B11/052; C25B11/061; C25B11/063; C25B11/081; C25B13/02; C25B13/08; H01M4/86; H01M4/96; H01M8/0656; H01M8/10; H01M8/1004; H01M8/1058

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2004-315933 A (KOBELCO ECO-SOLUTIONS CO., LTD.) 11 November 2004 (2004-11-11) paragraphs [0015]-[0037], fig. 1, 2 | 1-6, 9-11, 14, 15 |
| Y | | 8, 9, 11-15 |
| A | | 7 |
| Y | JP 2010-174346 A (TOSOH CORP.) 12 August 2010 (2010-08-12) paragraphs [0014]-[0020], [0023]-[0031], fig. 1, 4 | 8, 9, 11-15 |
| Y | JP 2008-274326 A (CHLORINE ENGINEERS CORP.,LTD.) 13 November 2008 (2008-11-13) paragraphs [0016], [0030], [0032], fig. 1 | 12-15 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 December 2022** | **27 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/038689**

**C. DOCUMENTS CONSIDERED TO BE RELEVANT**

| Category* | Citation of document, with indication, where appropriate, of the relevant passages | Relevant to claim No. |
|---|---|---|
| A | JP 2001-279479 A (SHINKO PANTEC CO., LTD.) 10 October 2001 (2001-10-10) paragraphs [0037]-[0045], fig. 1-4 | 1-15 |
| A | WO 2021/085334 A1 (TOKUYAMA CORP.) 06 May 2021 (2021-05-06) paragraphs [0031]-[0115], fig. 1-17 | 1-15 |
| A | JP 2020-045512 A (KABUSHIKI KAISHA TOSHIBA) 26 March 2020 (2020-03-26) paragraphs [0044]-[0048], fig. 6, 7 | 1-15 |

Form PCT/ISA/210 (second sheet) (January 2015)

**INTERNATIONAL SEARCH REPORT**
**Information on patent family members**

International application No.
**PCT/JP2022/038689**

| Patent document cited in search report | Publication date (day/month/year) | Patent family member(s) | Publication date (day/month/year) |
|---|---|---|---|
| JP 2004-315933 A | 11 November 2004 | (Family: none) | |
| JP 2010-174346 A | 12 August 2010 | (Family: none) | |
| JP 2008-274326 A | 13 November 2008 | US 2008/0264780 A1<br>paragraphs [0025], [0042], [0043], [0051], [0052], fig. 1<br>EP 1985727 A1<br>KR 10-2008-0096408 A | |
| JP 2001-279479 A | 10 October 2001 | (Family: none) | |
| WO 2021/085334 A1 | 06 May 2021 | AU 2020376367 A<br>paragraphs [0031]-[0115], fig. 1-17<br>TW 202124779 A<br>CN 114555866 A | |
| JP 2020-045512 A | 26 March 2020 | EP 3626860 A1<br>paragraphs [0051]-[0059], fig. 6, 7 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11256380 A
- JP 2001279479 A